# EUROPÄISCHE PATENTSCHRIFT

(11) **EP 2 028 161 B1**
(45) Veröffentlichungstag und Bekanntmachung des Hinweises auf die Patenterteilung: **19.06.2013**
(21) Anmeldenummer: 08075601.8
(22) Anmeldetag: 02.07.2008
(51) Int. Cl.: C02F 11/00, C02F 1/52

(54) **Verfahren und Vorrichtung zur Rückgewinnung von Magnesiumammoniumphosphat aus Klärschlamm**
Device and method for regaining magnesium ammonium phosphate from sewage sludge
Procédé et dispositif de récupération de phosphate ammoniacomagnésien à partir d'une boue d'épuration

(30) Priorität: 27.07.2007 DE 102007035910
(43) Veröffentlichungstag der Anmeldung: 25.02.2009
(73) Patentinhaber: Berliner Wasserbetriebe Anstalt des öffentlichen Rechts, 10179 Berlin (DE)
(72) Erfinder: Hannemann, Thomas, Dipl.-Ing., 16552 Schildow (DE); Jonsch, Gernot, Dipl.-Ing., 10317 Berlin (DE); Lengemann, Andreas, Dipl.-Ing., 15366 Neuenhagen (DE)

(56) Entgegenhaltungen:
- EP-A- 1 120 380
- JP-A- 2004 305 991

## Beschreibung

Die Erfindung betrifft ein Verfahren zur Rückgewinnung von Magnesiumammoniumphosphat (MAP), das bei der Klärschlammbehandlung Anwendung findet und eine Vorrichtung zur Durchführung des Verfahrens.

Phosphor ist ein wichtiger und lebensnotwendiger Stoff für die Organismen.
Bekannt ist, dass der kommunale Faulschlamm aus Kläranlagen mit biologischer Phosphorelemination ein reichhaltiges Angebot für das Vorhandensein von Phosphor darstellt. Eine mögliche Rückgewinnung des Phosphors in wieder verwertbarer Form ist die Kristallisation und Fällung als MAP aus dem Faulschlamm.

Nach der DE 101 12 934 B4 ist dazu ein Verfahren bekannt, bei dem der Faulschlamm belüftet wird, um durch CO₂-Stripping den pH-Wert zu erhöhen und bei gleichzeitiger Zugabe von Magnesiumchlorid das MAP auszufällen.
Für dieses Verfahren sind Fällungsreaktoren bekannt, die eine spezifische Form der Blasensäule in den drei Phasen als Schlammwasser, MAP und Luft ausweisen (Stratful, 1999: Biological phosphorus removal, its role in phosphorus recycling. Environmental Technology, Vol. 20, Seite 681 - 695; Air Prex MAP-Verfahren: http://pcs-consult.de/html/airprex3.html). Die Nachteile bestehen darin, dass enorme Energiekosten durch die Belüftung entstehen.
Ein weiteres Verfahren ist das PHOSNIX-Verfahren (PHOSNIX-process: Technology for recovery of phosphorus resources from wastewater, Unitika, Ltd., JP-0098E), das auch auf dem Prinzip der Blasensäule basiert. Um den pH-Wert zu erhöhen wird Lauge zugegeben. Die Belüftung erfolgt in dem die MAP-Kristalle durch den Luftstrom in Schwebe gehalten werden.
Nachteilig hierbei ist, der Einsatz von hohen Mengen an Laugen.

Die Zugabe von Magnesiumhydroxid in einen Einbehälter-Betrieb in Form einer Blasensäule wird in der Kläranlage Brisbane (England) betrieben (v. Münch, A. Benesovsky-Scott, J. Josey and K. Barr: Making a business from struvite crystallization for wastewater treatment, Brisbane Water 240 Donaldson Road, Rocklea, QLD 4106, Australia), jedoch besitzt diese die Nachteile, dass durch den Einsatz von Magnesiumhydroxid eine zeitlich verspätete und unvollständige Fällung der Phosphate stattfindet. Außerdem ist Magnesiumhydroxid eine Suspension und muss ständig beim Transport und bei der Lagerung gewälzt werden.

In dem für die MAP-Versuchsanlage auf der Hiagan Kläranlage in Kitakyushu entwickelten Reaktor werden Meerwasser und MAP derart gemischt und verteilt, dass die MAP-Partikel durch eine Kristallisation größer werden. Danach werden aus der Mischflüssigkeit die MAP-Partikel sedimentiert und das behandelte Wasser wird zum Hauptstrom zurückgeleitet (K. Kumashiro, H. Ishiwatari, Y. Nawamura: A Pilot Plant Study on using Seawater as Magnesium Source for Struvite Precipitation, 1. Water Quality Control Section, Construction Bureau, 96-3 Nishiminato-Mati, Kokurakita-Ku, Kitakyushu, 803-0801, Japan).

Negativ hierbei ist eine hohe Natrium-Chloridbelastung der Prozesswässer.

Des Weiteren sind Fließbettreaktoren bekannt, bei denen meist Filtrat- oder Zentratwasser aus der Schlammentwässerung eine Schicht aus Quarzsand durchströmt.
In der bekannten Anlage (Battistoni P., R. Boccadoro, P. Pavan, F. Cecchi: 2001, Struvite crystallisation in sludge dewatering supernatant using air stripping: the new-full scale plant at Treviso, Italy, sewage works, 2nd international conference on recovery of phosphate from sewage and animal wastes, Noordwijkerhout, Holland) in Treviso wird vom Luftstripper das Filtratwasser nach der Faulschlammentwässerung durch die Bandfilterpresse in den Fließbettreaktor geleitet. Dieser ist mit Quarzsand gefüllt, der eine heterogene Keimbildung für die MAP-Kristallisation begünstigt.
Der Nachteil für dieses Verfahren mit technischer Konfiguration ist der verspätete Kristallisationsprozess, dass heißt die Phosphate werden durch die gesamte Schlammbehandlungsanlage gefördert und fallen ungewollt an Rohrwandungen, Pumpen und Zentrifugen aus, bevor die gewollte Ausfällung aus dem Filtrat oder Zentrat stattfindet.

Eine weitere Entwicklung eines Verfahrens der Phosphorrückgewinnung mit einem Fließbettreatkor ist in Tokio (K. Shimamura, T. Tanaka, Y. Miura und H. Ishikawa: 2003, Water Science and Technology Vol 48 No1pp 163 - 170, Development of a high-efficiency phosphorus recovery method using a fluidized-bed crystallized phosphorus removal system Ebara Corporation, Japan) betrieben worden.

Die dazugehörige Fällungsanlage besteht aus einem Haupt- und Nebenbehälter.
Der Nebenbehälter dient zur Bildung von Kristallisationskeimen, während im Hauptbehälter MAP ausgefällt wird.
Durch den extra Behälter für die Keimbildung ist der apperatetechnische Aufwand sehr groß.

Die EP 1 120 380 A betrifft einen Reaktor zum Enthärten und/oder Aufbereiten von Wasser. Das Aufbereitete Abwasser wird dabei wieder dem Produktionsprozeß zugeführt. In der JP 2004 305 991 A wird eine grannulierende Dephosphorisierungvorrichtung zur Beseitigung und Klärschlammbehandlung von Phosphor beschrieben.

Aufgabe der Erfindung ist es, ein ertragreiches und kostengünstiges Verfahren zur Rückgewinnung von MAP aus gelöstem Phosphor bei der Klärschlammbehandlung und eine Vorrichtung zur Durchführung des Verfahrens zu schaffen. Die Aufgabe wird durch die Vorrichtung gemäß Anspruch 1 und das Verfahren gemäß Anspruch 2 gelöst.

Erfindungsgemäß wird die Aufgabe dadurch gelöst, dass der Schlamm bekannterweise aus dem Faulbehälter über Schlammleitungen in einen Reaktionsbehälter, der aus einem Zylinderteil und einem Trichter besteht, eingetragen wird. Dabei wird der Faulschlamm mit Luft und dem zirkulierenden Schlamm unter Zugabe von Magnesiumchlorid vermischt. Nach der Entgasung des Faulschlammes wird dieser über einen Zwischenraum gelenkt und im Kreislaufsystem zwischen Lüfterelementen nach unten gedrängt und mit Luft vermischt. In gleicher Menge wird der Schlamm unterhalb einer vorhandenen Trennwand in eine Zone 1 einer zweigeteilten Belüftungszone transportiert und unterhalb von angeordneten Traversen mit dem in einer Zone 2 zirkulierenden Schlamm vermischt.
Anschließend wird der Schlamm in gleicher Menge über eine Überlaufkante ein geteilter Entnahmeschacht zugeführt.
In dem Zylinderteil des Reaktorbehälters sind die Zone 1 und die Zone 2 einer zweigeteilten Belüftungszone angeordnet. Zwischen diesen beiden Zonen befindet sich eine Wand, die mindestens 1 m oberhalb des Schlammspiegels beginnt und mindestens 1 m unterhalb der Lüfterelemente endet.
In der Zone 1 erfolgt die Faulschlammzugabe und in der Zone 2 die Faulschlammentnahme.
In der Zone 1 der zweigeteilten Belüftungszone wird der größte Teil des CO₂ ausgestrippt und in der Zone 2 der bereits zum Teil entgaste Schlamm nochmals mit Luft beaufschlagt, so dass wieder ein Partialdruck vorhanden ist.
Der Lufteintrag in Nm³/h hat den dreifachen Wert wie das Behältervolumen in m³, um eine ausreichende Umwälzung zu garantieren.

Die Lufteinpressung sorgt aufgrund der turbulenten Strömung, die beim Aufsteigen der Gasblasen entsteht, für eine gute Durchmischung und Entgasung des Faulschlamms.
Eine Umwälzung des Reaktionsbehälters findet ausschließlich durch den Lufteintrag initiiert statt.
Der Schlamm wird oberhalb eines Strömungsschachtes an der Schlammoberfläche entgast und in Richtung Behälterwand horizontal umgelenkt.
Bei der Umlenkung des Schlammes unterhalb der Belüftungszone werden die schweren MAP-Partikel in eine Belüftungszone und anschließend in eine Trichterspitze geleitet.
An dem Übergang von dem Zylinderteil und dem Trichter sind Lüfterelemente mit zuführenden Hauptluftleitungen angeordnet.
Oberhalb der Lüfterelemente und unterhalb des Schlammspiegels befindet sich ein Strömungsschacht. Zwischen dem Schlammspiegel und dem Strömungsschacht ist ein zweigeteilter Entnahmeschacht angeordnet.
Vorteile des erfindungsgemäßen Verfahrens und der erfindungsgemäßen Vorrichtung sind, dass durch Zugabe von Magnesiumchlorid in den Faulschlamm und den durch die Entgasung initiierten pH-Wert Sprung, zur Ausfällung von MAP kommt. Des Weiteren bleiben durch die relativ hohen Strömungsgeschwindigkeiten im Zirkulationsstrom die Fällprodukte in Schwebe und binden sich an Kristallisationskeime.
Die entstehenden Kristalle bleiben so lange in Schwebe, bis sie so groß sind, dass die Sinkgeschwindigkeit größer als die Zirkulationsgeschwindigkeit des Schlammes ist. Erst dann sinken diese unterhalb der Traversen auf den Trichterboden.
In der 30° Zone des Trichters werden diese durch die Bodenströmung zur Trichterspitze mit 60° Neigung geschoben.
Dort sinken diese durch die Schwerkraft in den MAP Austragsbehälter ab. Ist der Austragsbehälter mit MAP gefüllt, wird der Schieber zwischen Austragsbehälter und Trichterspitze geschlossen.
Danach wird der Schieber zwischen Austragsbehälter und Schnecke geöffnet und das kristalline MAP mittels der Schnecke in den Container gefördert.
Ist der Austragsbehälter geleert, werden die Schieber in umgekehrter Reihenfolge betätigt und der Füllvorgang beginnt von neuem.
Kleine MAP Kristalle, die sich noch in Schwebe befinden und in den Entnahmeschacht gelangen, sinken durch die dort herrschende geringe Strömungsgeschwindigkeit im nach unten offenen Teil des Schachtes zum Trichterboden ab, und werden durch die Bodenströmung wieder aufgewirbelt. Dadurch gelangen diese wieder in den Zirkulationskreislauf. Dieser Teil des Entnahmeschachtes wirkt als MAP Abscheider für kleine Kristalle.

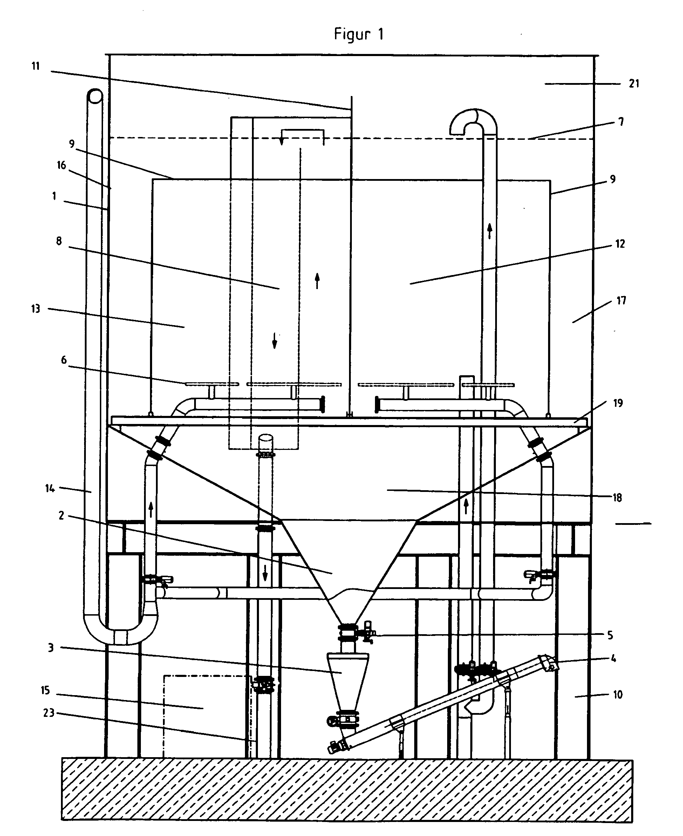

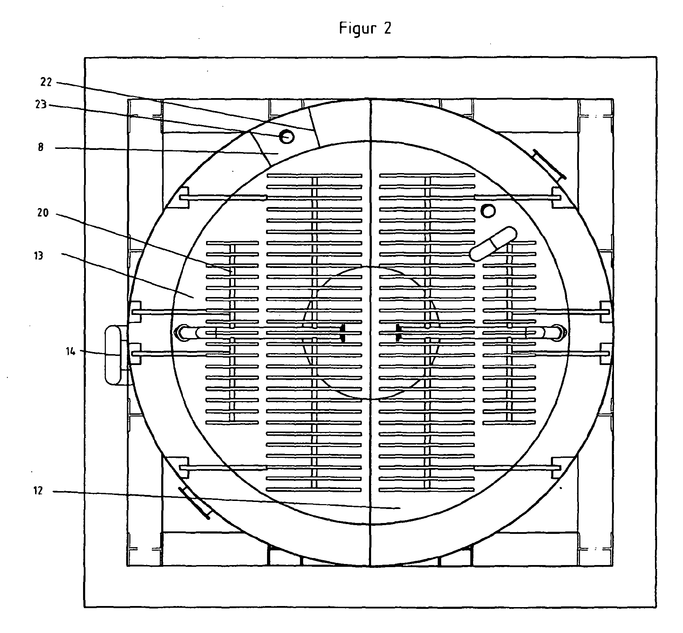

Die Erfindung soll nachstehend anhand der Figuren 1 und 2 näher erläutert werden.
Die Figur 1 zeigt den prinzipiellen Aufbau und die Verfahrensweise des erfindungsgemäßen Reaktionsbehälters.
Die Figur 2 zeigt die Draufsicht des Reaktionsbehälters.

Der Reaktionsbehälter besteht aus dem Zylinderteil 1 und dem Trichter 2. Unterhalb des Trichters 2 befindet sich der MAP-Austragsbehälter 3, ausgelegt entsprechend des zu erwartenden Kristallanfallsvolumens. Unter diesem MAP-Austragsbehälter 3 ist die Schnecke 4 angeordnet, die das MAP in einem Container fördert. Der MAP-Austragsbehälter 3 wird durch Schieber 5 entweder zur Schnecke 4 oder zum Reaktionsbehälter hin abgesperrt, so dass die Schnecke 4 nicht dem Schlammdruck ausgesetzt ist. Im Reaktionsbehälter befinden sich in der Ebene des Übergangs vom Zylinder 1 zum Trichterteil 2 Lüfterelemente 6, die für einen Gesamtluftdurchsatz in Nm³/h von 3-mal dem Wert des Behälterspeichervolumens ausgelegt sind. Im Reaktionsbehälter herrscht ein konstanter Schlammspiegel 7. Der Faulschlamm fließt aus dem Faulbehälter in den Reaktionsbehälter. Dabei wird der bereits belüftete Faulschlamm über den Entnahmeschacht 8 von unterhalb der Lüfterelemente 6 in einen Sammelbehälter verdrängt. Die austretende Luft wird in die Atmosphäre abgegeben. Es wird ein zylindrischer Strömungsschacht 9 oberhalb der Lüfterelemente 6 angebracht, der die Umwälzung wesentlich verstärkt. Aufgrund der geringen Strömungsgeschwindigkeiten im Trichterteil 1 setzt sich das MAP an der Wand des Trichterteils 1 ab und sinkt dort aufgrund der starken Neigung zu dessen Spitze ab und fällt in den Austragsbehälter 3.

Der Reaktionsbehälter ist ein Rundbehälter, der auf Stützen 10 gestellt ist. Da der Behälter ständig von Faulschlamm durchflossen wird, ist eine Wärmeisolierung nicht unbedingt erforderlich, jedoch ist der Schlamm dann weniger ausgekühlt und besser zu entwässern.

Um das Gefälle des Partialdrucks des gelösten CO₂ gegenüber dem Partialdruck des CO₂ in den vom Schlamm eingeschlossenen Luftblasen zu vergrößern, wird das Zylinderteil 1 des Behälters in zwei nacheinander geschaltete Belüftungszonen aufgeteilt. Die Zonen werden durch Einbringen einer mittig im Behälter angeordneten Trennwand 11 realisiert. Die Trennwand 11 beginnt 1 m oberhalb des Schlammspiegels 7 und endet ungefähr 1 m unterhalb der Lüfterelemente 6. Der Schlamm fließt unterhalb der Trennwand 11 durch Verdrängung von Zone 1 12 nach Zone 2 13. In der Zone 1 12 ist die Faulschlammzugabe. In der Zone 2 13 ist die Faulschlammentnahme.
Die wesentlichen Elemente des Systems sind die Lüfterelemente 6 mit den zuführenden Hauptluftleitungen 14, der Strömungsschacht 9 und der Luftverdichter 15. Die Lufteinpressung dient zur Wälzung des Faulschlamms und zur Erhöhung des pH-Wertes und der dadurch initialisierten Ausfällung von MAP.
Zusätzlich wird umlaufend oberhalb der Lüfterelemente 6 ein Strömungsschacht 9 aufgebaut, der ungefähr 500 mm unterhalb des Schlammspiegels 7 endet.
Damit wird durch Dichteunterschiede innerhalb des Strömungsschachtes 9 eine Aufwärtsbewegung erzeugt. Oberhalb des Schachtes, an der Schlammoberfläche entgast der Schlamm und wird in Richtung Behälterwand 16 umgelenkt. Zwischen dem Strömungsschacht 9 und der Behälterwand 16 sinkt der schwerere Schlamm nach unten und beim Verlassen des Zwischenraumes 17 fließt er in Richtung Behältermitte.
Der Schlamm wird unterhalb der Lüfterelemente 6 umgelenkt. Bei der Umlenkung des Schlammes gelangen die schweren MAP-Partikel in die Beruhigungszone 18 unterhalb der Lüfterelemente 6 und sinken zur Trichterspitze ab.
Die Beruhigungszone 18 wird durch den zweigeteilten Trichter 2 gebildet. In dem oberen Teil mit 30° Neigung setzen sich die schweren MAP-Partikel am Boden ab und werden durch die Strömung zur Trichterspitze gefördert. Die Trichterspitze hat eine Neigung von 60°. Dadurch fallen die Partikel in Richtung Austragsbehälter 3 ab.
Durch den eingebauten Strömungsschacht 9 entstehen im Behälter Strömungsgeschwindigkeiten bis zu 0,5 m/s und kleine Kristalle werden in Schwebe gehalten und gelangen so nicht in die Beruhigungszone 18.
Die eingetragene potentielle Energie wird komplett in Bewegungsenergie umgewandelt.
Die Anordnung der Lüfterelemente 6 erfolgt auf Traversen 19 oberhalb des Trichters 2.
Bei Vollfüllung des Behälters entsteht eine Wassersäule von 4 bis 7 m, vorzugsweise 6 m über den Lüfterelementen 6. Unter Berücksichtigung von Druckverlusten und Verschmutzungen an den Lüfterelementen 6 wird ein Förderdruck von maximal 0,8 bar erforderlich.
Das Luftleitungssystem besteht aus einer Hauptluftleitung 14 und den Verteilerrohrleitungen 20.
Diese Verteilerrohrleitungen 20 werden ungefähr 300 bis 700 mm oberhalb der Traversenträger 19 mit diesen durch Halterungen verbunden.
In den Zonen 1 12 und Zone 2 13 des Behälters befindet sich in der Wand des Strömungsschachtes 9 ein verschraubter Durchgang, der zu der Traversenebene führt.

Am Tiefpunkt der Hauptluftleitung 14 wird eine Entleerungs- und Kontrollleitung DN 100 eingebunden, die aus dem Behälter geführt wird. Darüber wird Kondensat abgelassen, und kontrolliert, ob Faulschlamm durch ein defektes Lüfterelement 6 in die Hauptluftleitung 14 eingedrungen ist.
Auf ungefähr 2 m Behälterumfang wird der zweigeteilte Entnahmeschacht 8 zwischen dem Zylinderteil 1 und dem Strömungsschacht 9 ausgebildet. Der Entnahmeschacht 8 ist nach oben zum Gasraum 21 offen. Diese Öffnung befindet sich ungefähr 500 mm über dem Schlammspiegel 7, so dass der Schlamm dort nicht abwärts fließt.
Die eine Hälfte des Entnahmeschachtes 8 ist ab Höhe der Traversen 19 zum Behälterboden hin offen. In diesem Teil des Entnahmeschachtes 8 wird der Schlamm nach oben verdrängt. Durch die geringe Fließgeschwindigkeit von maximal 0,04 m/s, fällt eventuell mitgerissenes MAP nach unten und wird in den Trichter 2 gespült. Noch mitgerissene Gasblasen entweichen.

Der Schlamm fließt über die Überlaufkante 22, die sich auf Höhe des Schlammspiegels befindet, in den zweiten Teil des Entnahmeschachtes 8. Dieser Teil ist bis zum Trichter 2 hin geschlossen. Im Trichter 2 befindet sich die Ablaufleitung 23.
Erhöht sich durch Schaumbildung der Schlammspiegel 7, fließt der Schaum in den Entnahmeschacht 8 und von dort in die Ablaufleitung 23.
Der Schlamm fließt durch den geodätischen Höhenunterschied in einen Speicherbehälter. Der Luftverdichter 15 wird unterhalb des Behälters in einer Schallschutzhaube aufgestellt. Das Fördervolumen beträgt 1,5 bis 3-mal den Wert des Behältervolumens in Nm³/h, der Förderdruck von 0,4 bis 0,8, vorzugsweise 0,7 bar, der elektrischer Leistungsbedarf ungefähr 0,02 bis 0,03 KW/Nm³.
Die Drehkolbengebläse oder Turboverdichter werden als Drucklufterzeuger eingesetzt. Um eine effektive Regelung des Luftverdichters zu erreichen und die Effizienz des Verfahrens festzustellen, werden Schlammaufgabemenge auf den Behälter, der pH-Wert des Schlammes am Eintritt in und am Austritt aus dem Behälter und der Luftvolumenstrom gemessen.
Das im Behälter befindliche freie gelöste Phosphat wird durch einen, durch die Belüftung herbeigeführten pH-Wert Sprung und durch die Zugabe von Magnesiumchlorid als MAP auskristallisiert.
Das als einzelne lose Kristalle vorliegende MAP wird aus dem Behälter ausgekreist. In Abhängigkeit vom MAP Anfall wird periodisch der MAP-Austragsbehälter vom Reaktionsbehälter durch einen Schieber getrennt und eine Austragsschnecke durch das Öffnen eines Schiebers mit dem MAP-Austragsbehälter 3 verbunden. Durch die Schnecke 4 wird das MAP in einen Container gefördert. Der Schneckenaustrag befindet sich oberhalb der der Oberkante des MAP-Austragsbehälters 3, so dass die Flüssigphase im Behälter weitgehend verbleibt.

### Aufstellung der vorhandenen Bezugszeichen zur Patentanmeldung "Verfahren und Vorrichtung zur Rückgewinnung von Magnesiumammoniumphosphat bei der Klärschlammentwässerung"

| | |
|---|---|
| 1 | Zylinderteil |
| 2 | Trichter |
| 3 | Austragsbehälter |
| 4 | Schnecke |
| 5 | Schieber |
| 6 | Lüfterelemente |
| 7 | Schlammspiegel |
| 8 | Entnahmeschacht |
| 9 | Strömungsschacht |
| 10 | Stützen |
| 11 | Trennwand |
| 12 | Zone 1 |
| 13 | Zone 2 |
| 14 | Hauptluftleitungen |
| 15 | Luftverdichter |
| 16 | Behälterwand |
| 17 | Zwischenraum |
| 18 | Beruhigungszone |
| 19 | Traversen |
| 20 | Verteilerrohdeitung |
| 21 | Gasraum |
| 22 | Überlaufkante |
| 23 | Ablaufleitung |

## Patentansprüche

1. Vorrichtung bestehend aus dem Zylinderteil und dem Trichter
**dadurch gekennzeichnet, dass**
in dem Zylinderteil (1) eine Zone 1 (12) und eine Zone 2 (13) einer zweigeteilten Belüftungszone, getrennt von einer Wand (11), vorhanden sind und im unteren Teil des Trichters (2) ein MAP-Austragsbehälter (3) angeordnet ist, der über den Schieber (5) mit dem Trichter (2) und einem weiteren Schieber mit der Schnecke (4) verbunden ist wobei an dem Übergang von dem Zylinderteil (1) und dem Trichter (2) Lüfterelemente (6) mit zuführenden Hauptluftleitungen (14) angeordnet sind, die über Luftverdiechter (15) versorgt werden wobei der Trichter (2) zweigeteilt ausgebildet ist, wobei der obere Teil des Trichters (2) mit einer Neigung von 30 ° und die Trichterspitze mit einer Neigung von 60 ° versehen ist, oberhalb der Lüfterelemente (6) und unterhalb des Schlammspiegels ein Strömungsschacht (9) befindet, zwischen dem Zylinderteil (1) und dem Strömungsschacht (9) ist ein zweigeteilter Entnahmeschacht (8) angeordnet, die eine Hälfte des Entnahmeschachts (8) ab Höhe der Traverse (19) ist zum Behälterboden offen und eine zweite Hälfte zum Trichter (2) geschlossen.

2. Verfahren zur Rückgewinnung von Magnesiumammoniumphosphat (MAP) bei der Klärschlammbehandlung durch Eintrag des Faulschlammes aus einem Faulbehälter über Schlammleitungen in einen Reaktionsbehälter, durch Vermischung von
Faulschlamm mit Luft und dem zirkulierenden Schlaamm sowie durch Zugabe von Magnesiumchlorid durch geführt mit einer Vorrichtung nach Anspruch 1
**dadurch gekennzeichnet, dass**
nach Entgasung des Faulschlammes an der Schlammoberfläche des Reaktionsbehälters oberhalb eines Strömungsschachtes (9) wird in Richtung Behälterwand horizontal umgelenkt und dieser über einen Zwischenraum (17) geleitet, im Kreislaufsystem zwischen Lüfterelementen (6) nach unten gedrängt und mit Luft vermischt, wobei der Lufteintrag in Nm³/h den dreifachen Wert wie das Behältervolumen in m³ hat, wodurch in der Zone 1 (12) der zweigeteillen Belüftungszone der größte Teil des CO₂ ausgestrippt und in der Zone 2 der bereits zum Teil entgaste Schlamm nochmals mit ruft beaufschlagt wird sowie danach in gleicher Menge unterhalb einer vorhandenen Trennwand (11) in eine Zone 1 (12) einer zweigeteilten Belüftungszone transportiert und unterhalb von Traversen (19) mit dem in einer Zone 2 (13) der zweigeteilten Belüftungszone zirkulierenden Schlamm vermischt wird, wobei die schwereren MAP-Kristalle in einer Beruhigungszone (18) und anschließend in einen Trichter geleitet werden und von dort in den MAP-Austragsbehälter absinken, der nach Füllung durch einen Schieber zwischen Austragsbehälter und Trichterspitze geschlossen wird, anschließend wird der Schieber zwischen Austragsbehälter und Schnecke geöffnet und das kristalline MAP mittels der Schnecke in den Container gefördert, nach Leerung des Austragsbehälters werden die Schieber in umgekehrter Reihenfolge betätigt und der Füllvorgang beginnt von neuem anschließend der Faulschlamm in gleicher Menge über eine Überlaufkante (22) einem geteilten Entnahmeschacht (8) zugeführt wird.

## Claims

1. Device consisting of a cylinder part and a funnel, **characterised in that** a Zone 1 (12) and a Zone 2 (13) of a two-part ventilating zone, separated by a wall (11), are present in the cylinder part (1) and an MAP delivery container (3) is arranged in the lower part of the funnel (2), which container is connected by way of the slide (5) with the funnel (2) and by way of a further slide with the worm (4), wherein arranged at the transition from the cylinder part (1) to the funnel (2) are ventilator elements (6) with primary air feed ducts (14) supplied by way of an air compressor (15), wherein the funnel (2) is of two-part construction, wherein the upper part of the funnel (2) is provided with an inclination of 30° and the funnel tip with an inclination of 60°, a flow shaft (9) is disposed above the ventilator elements (6) and below the sludge surface, and a two-part removal shaft (8) is arranged between the cylinder part (1) and the flow shaft (9), one half of the removal shaft (8) from the level of a cross member (19) being open towards the container base and a second half being closed towards the funnel (2).

2. Method for recovery of magnesium ammonium phosphate (MAP) in sewage sludge treatment by induction of digested sludge from a digestion container via sludge lines into a reaction container, through mixing digested sludge with air and the circulating sludge as well as by addition of magnesium chloride, carried out with a device according to claim 1, **characterised in that** after degassification of the digested sludge at the sludge surface of the reaction container above a flow shaft (9) this is horizontally deflected in the direction of the container wall and conducted via an intermediate space (17), forced downwardly in the circulation system between ventilator elements (6) and mixed with air, wherein the air induction in Nm³/h has three times the value of the container volume in m³, whereby in Zone 1 (12) of the two-part ventilation zone the major part of the CO₂ is stripped out and in Zone 2 the already partly degassified sludge is acted on again by air, as well as thereafter is transported in the same amount below a partition (11), which is present, into Zone 1 (12) of the two-part ventilating zone and below cross members (19) is mixed with the sludge circulating in Zone 2 (13) of the two-part ventilating zone, wherein the heavy MAP crystals are conducted into a calming zone (18) and subsequently into a funnel and from there sink into the MAP delivery container, which after filling is closed by a slide between delivery container and funnel tip, the slide between delivery container and worm is subsequently opened and the crystalline MAP is conveyed by means of the worm into the container, after emptying of the delivery container the slide is actuated in reverse sequence and the filling process begins again and subsequently the digested sludge is fed in the same amount via an overflow edge (22) to a divided removal shaft (8).

## Revendications

1. Dispositif constitué d'une partie cylindrique et d'une trémie,
**caractérisé en ce que**
dans la partie cylindrique (1) il est prévu une zone 1 (12) et une zone 2 (13) d'une zone de ventilation en deux parties séparées par une paroi (1), et , à la partie inférieure de la trémie (2) est monté un récipient de décharge (3) de phosphate de magnésium ammonium (MAP) qui est relié par un robinet-vanne (5) à la trémie (2) et par un autre robinet-vanne à une vis sans fin (4), au niveau de la transition entre la partie cylindrique (1) et la trémie (2) étant montés des éléments de ventilation (6) dans lesquels débouchent des conduites de ventilation principales (14), qui sont alimentées par un compresseur d'air (15), la trémie (2) étant réalisée en deux parties, la partie supérieure de la trémie (2) ayant une inclinaison de 30° tandis que la pointe de la trémie a une inclinaison de 60°, au-dessus des éléments de ventilation (6) et au-dessous du niveau des boues, étant positionné un puits d'écoulement (9), entre la partie cylindrique (1) et le puits d'écoulement (9) étant monté un puits de prélèvement en deux parties (8), une première moitié du puits de prélèvement (8) à partir de la hauteur d'une traverse (19) étant ouverte vers le fond du récipient tandis que la seconde moitié de ce puits est fermée vers la trémie (2).

2. Procédé de récupération de phosphate de magnésium ammonium (MAP) lors du traitement de boues de curage par introduction de boues putréfiées provenant d'un réservoir de putréfaction, en passant par des conduite de boues, dans un réacteur, par mélange des boues putréfiées avec de l'air et des boues en recirculation ainsi que par addition de chlorure de magnésium, mis en oeuvre avec un dispositif conforme à la revendication 1,
**caractérisé en ce qu'**
après dégazage à leur surface dans le réacteur, au dessus d'un puits d'écoulement (9) les boues putréfiées sont déviées horizontalement en direction des parois du réacteur, transférées par un espace intermédiaire (17), poussées en boucle vers le bas entre des éléments de ventilation (6) et mélangées à de l'air, la quantité d'air introduite ayant en Nm³/h trois fois la valeur du volume du réacteur en m³, de sorte que dans une zone 1 (12) de la zone de ventilation en deux parties la plus grande partie du CO₂ soit entrainée vers l'extérieur et que dans une zone 2 les boues déjà en partie dégazées soient à nouveau alimenté en air, et soient ensuite, en même quantité transportées au dessous d'une paroi de séparation (11) dans la zone 1 (12) de la zone de ventilation en deux parties, et mélangées en dessous de traverses (19) avec les boues en circulation dans la zone 2 (13) de la zone de ventilation en deux parties, les cristaux de MAP les plus lourds étant transférés dans une zone de repos (18) puis dans une trémie et tombant à partir de celle-ci dans un récipient de décharge de MAP, qui, après remplissage est fermé par un robinet vanne situé entre le réservoir de décharge et une pointe de la trémie, puis, un robinet vanne est ouvert entre le réservoir de décharge et une vis sans fin, et le MAP cristallin est alimenté au moyen de la vis sans fin dans une conteneur, après vidange du réservoir de décharge, les robinets vannes sont actionnés selon une succession inverse et le processus de remplissage commence à nouveau en transférant ensuite les boues putréfiées en même quantité par une arête de surverse (22) dans un puits de prélèvement (8) subdivisé.
